# EUROPEAN PATENT SPECIFICATION

(11) **EP 3 273 010 B1**
(45) Date of publication and mention of the grant of the patent: **05.06.2019**
(21) Application number: 17183737.0
(22) Date of filing: 02.04.2007
(51) Int. Cl.: F01D 25/16, F01D 25/24

(54) **MID-TURBINE FRAME**
MITTELTURBINENRAHMEN
CADRE DE TURBINE MOYENNE

(30) Priority: 04.04.2006 US 397157
(43) Date of publication of application: 24.01.2018
(62) Divisional of application: 07251453.2
(73) Proprietor: United Technologies Corporation, Farmington, CT 06032 (US)
(72) Inventor: KUMAR, Keshava B., South Windsor, CT 06074 (US); SOWA, William A., Simsbury, CT 06070 (US); NAGENDRA, Somanath, Manchester, CT 06042 (US)
(74) Representative: Dehns

(56) References cited:
- US-A- 3 245 734

## Description

### BACKGROUND OF THE INVENTION

The present invention generally relates to the field of gas turbine engines. In particular, the invention relates to a mid-turbine frame for a jet turbine engine.

Turbofans are a type of gas turbine engine commonly used in aircraft, such as jets. The turbofan generally includes a high and a low pressure compressor, a high and a low pressure turbine, a high pressure rotatable shaft, a low pressure rotatable shaft, a fan, and a combustor. The high-pressure compressor (HPC) is connected to the high pressure turbine (HPT) by the high pressure rotatable shaft, together acting as a high pressure system. Likewise, the low pressure compressor (LPC) is connected to the low pressure turbine (LPT) by the low pressure rotatable shaft, together acting as a low pressure system. The low pressure rotatable shaft is housed within the high pressure shaft and is connected to the fan such that the HPC, HPT, LPC, LPT, and high and low pressure shafts are coaxially aligned.

Outside air is drawn into the jet turbine engine by the fan and the HPC, which increases the pressure of the air drawn into the system. The high-pressure air then enters the combuster, which burns fuel and emits the exhaust gases. The HPT directly drives the HPC using the fuel by rotating the high pressure shaft. The LPT uses the exhaust generated in the combuster to turn the low pressure shaft, which powers the fan to continually bring air into the system. The air brought in by the fan bypasses the HPT and LPT and acts to increase the engine's thrust, driving the jet forward.

In order to support the high and low pressure systems, bearings are located within the jet turbine engine to help distribute the load created by the high and low pressure systems. The bearings are connected to a mid-turbine frame located between the HPT and the LPT by bearing support structures, for example, bearing cones. The mid-turbine frame acts to distribute the load on the bearing support structures by transferring the load from the bearing support structures to the engine casing. Decreasing the weight of the mid-turbine frame can significantly increase the efficiency of the jet turbine engine and the jet itself.

US 3,245,734 discloses a mid-turbine frame as set forth in the preamble of claim 1.

### BRIEF SUMMARY OF THE INVENTION

In one aspect, the invention provides a mid-turbine frame as recited in claim 1.

Features of embodiments of the invention are set forth in the dependent claims.

### BRIEF DESCRIPTION OF THE DRAWINGS

FIG. 1 is a partial sectional view of a gas turbine engine having a mid-turbine frame.
FIG. 2 is a perspective view of the mid-turbine frame.
FIG. 3A is a cross-sectional view of a first embodiment of the mid-turbine frame.
FIG. 3B is a schematic diagram of the first embodiment of the mid-turbine frame.
FIG. 4 is a free body diagram of the first embodiment of the mid-turbine frame.
FIG. 5A is a cross-sectional view of a second embodiment of the mid-turbine frame.
FIG. 5B is a schematic diagram of the second embodiment of the mid-turbine frame.

### DETAILED DESCRIPTION

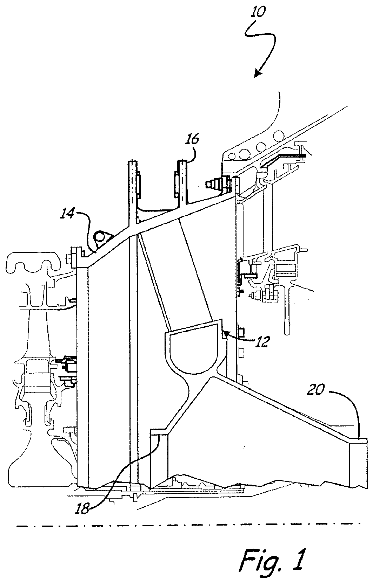

FIG. 1 shows a partial sectional view of an intermediate portion of gas turbine engine 10 about a gas turbine engine axis centerline. Gas turbine engine 10 generally includes mid-turbine frame 12, engine casing 14, mounts 16, first bearing 18, and second bearing 20. Mid-turbine frame 12 of gas turbine engine 10 has a lightweight design that transfers the loads from first and second bearings 18 and 20 to a single point load. The design of mid-turbine frame 12 is also capable of withstanding a large amount of load without deflecting, increasing its structural efficiency.

Mid-turbine frame 12 is housed within engine casing 14 of gas turbine engine 10. Mid-turbine frame 12 is connected to engine casing 14 and first and second bearings 18 and 20. Engine casing 14 protects mid-turbine frame 12 from its surroundings and transfers the loads from mid-turbine frame 12 to mounts 16. Mid-turbine frame 12 is designed to combine the loads from first and second bearings 18 and 20 to one point for a single point load transfer. Due to the design of mid-turbine frame 12, mid-turbine frame 12 has reduced weight. The weight of mid-turbine frame 12 will depend on the material used to form mid-turbine frame 12. In one embodiment, mid-turbine frame 12 has a weight of less than approximately 200 pounds (91 kg). For example, mid-turbine frame 12 formed of a Nickel-based alloy has a weight of approximately 175 pounds (80 kg). Mid-turbine frame 12 is also designed as a functional plenum and does not require an independent heat transfer plenum. In addition, mid-turbine frame 12 can be integrally cast as one piece with a cooling air redistribution device as an integral component.

First and second bearings 18 and 20 are located at forward and aft ends of gas turbine engine 10, respectively, below mid-turbine frame 12. First and second bearings 18 and 20 support thrust loads, vertical tension, side gyroscopic loads, as well as vibratory loads from high and low pressure rotors located in gas turbine engine 10. All of the loads supported by first and second bearings 18 and 20 are transferred to engine casing 14 and mounts 16 through mid-turbine frame 12. Second bearing 20 is typically designed to support a greater load than first bearing 18, so mid-turbine frame 12 is designed for stiffness and structural feasibility assuming that second bearing 20 is the extreme situation.

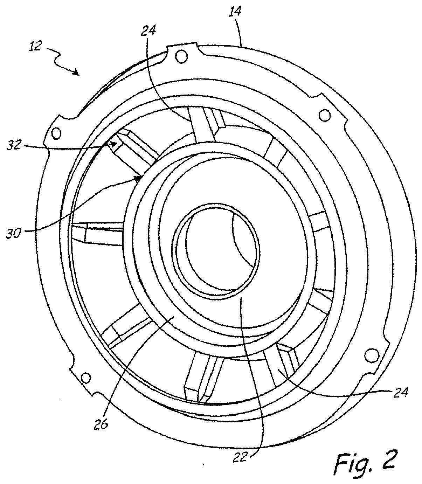

FIG. 2 shows an enlarged, perspective view of mid-turbine frame 12 within a cross-section of engine casing 14. Mid-turbine frame 12 generally includes torque box 22 and struts 24. First and second bearings 18 and 20 (shown in FIGS 1) are connected to mid-turbine frame 12 by first bearing cone 26 and second bearing cone 28 (shown in FIG. 1), respectively. First and second bearings cones 26 and 28 are continuously rotating with high and low pressure rotors and transfer the loads from first and second bearings 18 and 20 to mid-turbine frame 12.

Torque box 22 has a shell structure and is positioned between first and second bearing cones 26 and 28 and struts 24. Torque box 22 takes the loads, or torque, from first and second bearing cones 26 and 28 and combines them prior to transferring the loads to struts 24, which extend from along the circumference of torque box 22.

Struts 24 of mid-turbine frame 12 transfer the loads from first and second bearing cones 26 and 28 entering through torque box 22 to engine casing 14. Each of struts 24 has a first end 30 connected to torque box 22 and a second end 32 connected to engine casing 14. The loads travel from torque box 22 through struts 24 to engine casing 14. In one embodiment, struts 24 have an elliptical shape and are sized to take a load and transfer it in a vertical direction toward engine casing 14. In one embodiment, nine struts are positioned approximately forty degrees apart from one another along the circumference of torque box 22. In another embodiment, twelve total struts are positioned approximately thirty degrees apart from one another along the circumference of torque box 22.

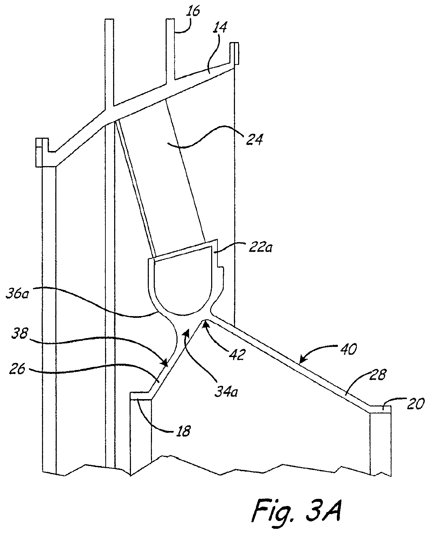

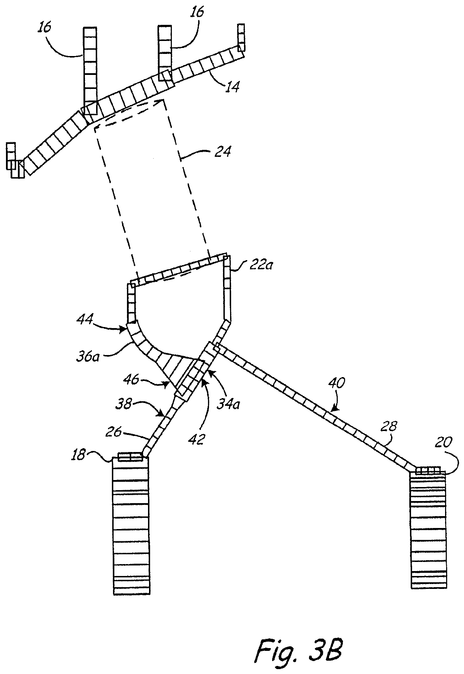

FIGS. 3A and 3B show a cross-sectional view and a schematic diagram of a first embodiment of torque box 22a, respectively, and will be discussed in conjunction with one another. Torque box 22a is U-shaped and generally includes U-stem 34a and U-branch 36a. U-stem 34a of mid-turbine frame 12 has a first portion 38, a second portion 40, and a U-shaped center portion 42. U-stem 34a is positioned below torque box 22 and connects first and second bearing cones 26 and 28 to each other as well as to torque box 22a. First portion 38 of U-stem 34a extends from center portion 42 towards first bearing 18 and also functions as first bearing cone 26. Second portion 40 of U-stem 34a extends from center portion 42 towards second bearing 20 and also functions as second bearing cone 28. First and second bearing cones 26 and 28 are thus part of U-stem 34a and merge together at center portion 42. The loads of first and second bearing cones 26 and 28 are introduced into torque box 22a at center portion 42 U-stem 34a. Due to the shell shape of U-stem 34a, mid-turbine frame 12 can handle large loads at a time without deflecting. U-stem 34a also acts as a protective heat shield and provides thermal protection to torque box 22a.

U-branch 36a has a first end 44 and a second end 46. First end 44 of U-branch is connected to torque box 22a and second end 46 of U-branch 36a is connected to U-stem 34a at center portion 42 of U-stem 34a. By connecting U-branch 36a to center portion 42 of U-stem 34a, U-branch 36a can function as a bearing arm load transfer member.

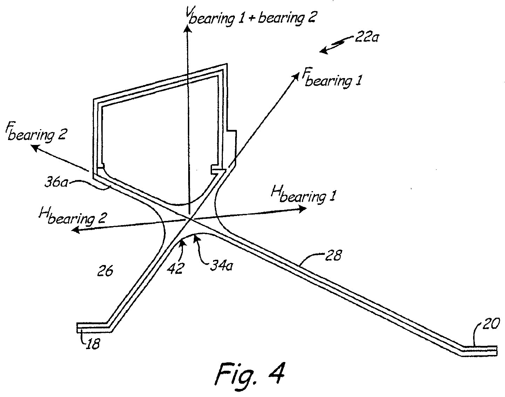

FIG. 4 is a free body diagram of torque box 22a connected to first and second bearings 18 and 20. The loads, or reaction forces, from first and second bearings 18 and 20 come through first and second bearing cones 26 and 28, F_{bearing1} and F_{bearing2}, respectively. Reaction forces F_{bearing1} and F_{bearing2} come in at an angle and intersect at U-stem 34a. The reaction forces are then broken up into simple vectors with horizontal components H_{bearing1} and H_{bearing2} and vertical components V_{bearing1} and V_{bearing2}. The horizontal components H_{bearing1} and H_{bearing2} come in at opposite directions and cancel each other out a center portion 42 of U-stem 34a. Because the horizontal components H_{bearing1} and H_{bearing2} cancel each other out, only the vertical components V_{bearing1+bearing2} are transferred through U-stem 34a and U-branch 36a to torque box 22a. The total load is thus reduced due to the absorptive components being cancelled at center portion 42 of U-stem 34a.

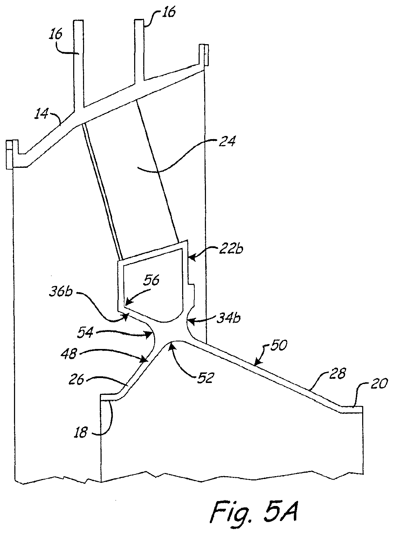

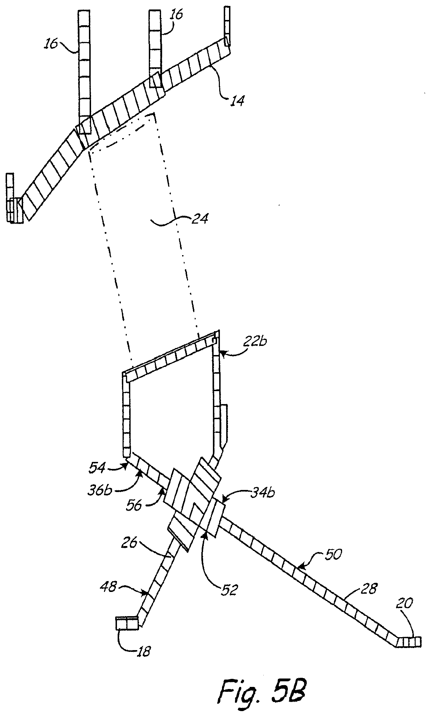

FIGS. 5A and 5B show a cross-sectional view and a schematic diagram of a second embodiment of torque box 22b, respectively, and will be discussed in conjunction with one another. Torque box 22b is X-shaped and generally includes X-stem 34b and X-branch 36b. Similar to torque box 22a, first and second bearings 18 and 20 are connected to X-shaped mid-turbine frame 22b by first and second bearing cones 26 and 28, respectively. The loads from first and second bearings 18 and 20 travel through first and second bearing cones 26 and 28 respectively, and are transferred to torque box 22b. Torque box 22b then transfers the load to engine casing 14 and mounts 16.

X-stem 34b of torque box 22b has a first portion 48, a second portion 50, and an X-shaped center portion 52. X-stem 34b is positioned below torque box 22b and connects first and second bearing cones 26 and 28 to each other as well as to torque box 22b. First portion 48 of X-stem 34b extends from center portion 52 towards first bearing 18 and also functions as first bearing cone 26. Second portion 50 of U-stem 34b extends from center portion 52 towards second bearing 20 and also functions as second bearing cone 28. First and second bearing cones 26 and 28 are thus part of X-stem 34b and merge together at center portion 52. X-stem 34b acts as a protective heat shield and provides thermal protection to torque box 22b. The loads of first and second bearing cones 26 and 28 are also introduced into torque box 22b at X-stem 34b.

X-branch 36b has a first end 54 and a second end 56. First end 54 of X-branch 36b is connected to torque box 22b and second end 56 of X-branch 36b is connected to X-stem 34b at center portion 52 of X-stem 34b. By connecting X-branch 36b to center portion 52 of X-stem 34b, X-branch 36b can function as a bearing arm load transfer member.

In operation, X-stem 34b of torque box 22b functions similarly to U-stem 34a of torque box 22a except that due to the X-shape of center portion 52, there is a scissor action that causes an additional load and local state of stress at center portion 52. Thus, while torque box 22b also has increased structural efficiency, the amount of load that torque box 22b can support before deflecting will be less than the amount of load that torque box 22a can support.

The torque box designs of the mid-turbine frame offer a lightweight structure with increased structural efficiency. The torque box has a single point transfer structure that delivers the loads from a first second bearing in the gas turbine engine. The single point transfer structure thus functions partly as a first and a second bearing cone. The loads from the first and second bearings combine at the single point transfer structure to a single load transfer point. Because the loads from the first and second bearings enter the single point transfer structure at an angle, the horizontal components of the loads cancel each other out. The only remaining force is in the vertical direction. The loads are combined and transferred to the torque box, which subsequently transfers the loads to a plurality of struts attached to the torque box. The struts are attached to an engine casing surrounding the mid-turbine frame, and delivers the load from the torque box to the engine casing. In one embodiment, the single point transfer structure has a U-shape. In another embodiment, the single point transfer structure has an X-shape.

Although the present invention has been described with reference to preferred embodiments, workers skilled in the art will recognize that changes may be made in form and detail without departing from the scope of the invention.

## Claims

1. A mid-turbine frame (12) connected to at least one mount (16) of a gas turbine engine (10) for transferring a first load from a first bearing (18) and a second load from a second bearing (20) to the mount (16), the mid-turbine frame (12) comprising:
a single point load shell structure, wherein the first load is transferred to the single point load shell structures by a first bearing cone (26) at a first angle that is not perpendicular to the rotational axis of the gas turbine engine (10) and the second load is transferred to the single point load shell structures by a second bearing cone (28) at a second angle that is not perpendicular to the rotational axis of the gas turbine engine (10); and
a plurality of struts (24) connected to the single point load shell structure for transferring the combined load from the single point load shell structure to the mount (12); **characterised in that** the mid-turbine frame (12) further comprises:
a concave surface that opens in a radially outward direction with respect to a rotational axis of the gas turbine engine (10) for combining the first load and the second load into a combined load; and
a torque box (22a;22b) having a first member and a second member both perpendicular to the rotational axis of the gas turbine engine (10) and joined by the concave surface for transferring the combined load from the concave surface; and **in that** the single point load shell structure is X-shaped and further comprises an x-branch (36b) connected to the concave surface and the first member of the torque box (22a;22b), the x-branch (36b) extending along a same plane as the second bearing cone (28), or is U-shaped with the first and second members joined by the concave surface.

2. The mid-turbine frame (12) of claim 1 wherein the concave surface comprises:
a stem (34a;34b) for combining the first and second loads into the combined load, wherein the first and second bearing cones (26,28) are integrated with the stem (34a;34b); and
a branch (36a;36b) connected to the stem (34a;34b) for absorbing a portion of the combined load from the stem (34a;34b), and wherein the torque box (22a;22b) has a first end and a second end, and wherein the torque box (22a;22b) is connected to the stem (34a;34b) and the branch (36a;36b) at the first end and connected to the plurality of struts (24) at the second end.

3. The mid-turbine frame (12) of claim 2, wherein the torque box (22a;22b) transfers the combined load from the stem (34a;34b) and the branch (36a;36b) to the plurality of struts (24).

4. The mid-turbine frame (12) of claim 2, wherein the stem (34a;34b) provides thermal protection to the torque box (22a;22b).

5. The mid-turbine frame (12) of claim 2, wherein the branch (36a;36b) functions as a bearing arm load transfer member (36a; 36b).

6. The mid-turbine frame (12) of claim 2, wherein the mid-turbine frame (12) has a weight of less than approximately 200 pounds (91 kg).

7. The mid-turbine frame (12) of claim 2, wherein the torque box (22a;22b) is a ring structure (22a; 22b).

8. The mid-turbine frame (12) of claim 1, wherein the first member is substantially parallel to the second member.

9. The mid-turbine frame (12) of claim 1, wherein the first bearing cone (26) connects to the single point load shell structure at a first angle that is not substantially perpendicular to the rotational axis of the gas turbine engine (10) and the second bearing cone (28) connects to the single point load shell structure at a second angle that is not substantially perpendicular to the rotational axis of the gas turbine engine (10).

10. A gas turbine engine (10) comprising:
a first bearing (18);
a second bearing (20) axially spaced from the first bearing (18) with respect to a rotational axis of the gas turbine engine (10);
an engine casing (14) radially spaced from the first and second bearings (18,20);
a first bearing cone (26) connected to the first bearing (18) for transferring a first load from the first bearing (18);
a second bearing cone (28) connected to the second bearing (20) for transferring a second load from the second bearing (20); and
the mid-turbine frame (12) of any preceding claim.

## Patentansprüche

1. Mittelturbinenrahmen (12), der mit mindestens einer Aufhängung (16) eines Gasturbinentriebwerks (10) verbunden ist, um eine erste Last von einem ersten Lager (18) und eine zweite Last von einem zweiten Lager (20) auf die Aufhängung (16) zu übertragen, wobei der Mittelturbinenrahmen (12) Folgendes umfasst:
eine Einzellastschalenstruktur, wobei die erste Last durch einen ersten Lagerkonus (26) in einem ersten Winkel, der nicht senkrecht zur Drehachse des Gasturbinentriebwerks (10) steht, auf die Einzellastschalenstrukturen übertragen wird und die zweite Last durch einen zweiten Lagerkonus (28) in einem zweiten Winkel, der nicht senkrecht zur Drehachse des Gasturbinentriebwerks (10) steht, auf die Einzellastschalenstrukturen übertragen wird; und
eine Vielzahl von Streben (24), die mit der Einzellastschalenstruktur verbunden sind, um die kombinierte Last von der Einzellastschalenstruktur auf die Aufhängung (12) zu übertragen; **dadurch gekennzeichnet, dass** der Mittelturbinenrahmen (12) ferner Folgendes umfasst:
eine konkave Oberfläche, die sich in radialer Richtung nach außen in Bezug auf eine Drehachse des Gasturbinentriebwerks (10) öffnet, um die erste Last und die zweite Last zu einer kombinierten Last zu kombinieren; und
einen Torsionskasten (22a; 22b) mit einem ersten Element und einem zweiten Element, die beide senkrecht zur Drehachse des Gasturbinentriebwerks (10) stehen und durch die konkave Oberfläche verbunden sind, um die kombinierte Last von der konkaven Oberfläche zu übertragen; und dadurch, dass die Einzellastschalenstruktur X-förmig ist und ferner einen x-Abzweig (36b) umfasst, der mit der konkaven Oberfläche und dem ersten Element des Torsionskastens (22a;22b) verbunden ist, wobei sich der x-Abzweig (36b) entlang einer gleichen Ebene wie der zweite Lagerkonus (28) erstreckt oder U-förmig ist, wobei das erste und zweite Element durch die konkave Oberfläche verbunden sind.

2. Mittelturbinenrahmen (12) nach Anspruch 1, wobei die konkave Oberfläche Folgendes umfasst:
einen Schaft (34a; 34b) zum Kombinieren der ersten und zweiten Last zu der kombinierten Last, wobei der erste und zweite Lagerkonus (26, 28) mit dem Schaft (34a; 34b) integriert sind; und
einen Abzweig (36a; 36b), der mit dem Schaft (34a; 34b) verbunden ist, um einen Teil der kombinierten Last vom Schaft (34a; 34b) aufzunehmen, und wobei der Torsionskasten (22a; 22b) ein erstes Ende und ein zweites Ende aufweist, und wobei der Torsionskasten (22a; 22b) am ersten Ende mit dem Schaft (34a; 34b) und dem Abzweig (36a; 36b) und am zweiten Ende mit der Vielzahl von Streben (24) verbunden ist.

3. Mittelturbinenrahmen (12) nach Anspruch 2, wobei der Torsionskasten (22a; 22b) die kombinierte Last von dem Schaft (34a; 34b) und dem Abzweig (36a; 36b) auf die Vielzahl von Streben (24) überträgt.

4. Mittelturbinenrahmen (12) nach Anspruch 2, wobei der Schaft (34a; 34b) dem Torsionskasten (22a; 22b) einen Wärmeschutz bietet.

5. Mittelturbinenrahmen (12) nach Anspruch 2, wobei der Abzweig (36a; 36b) als Tragarmlastübertragungselement (36a; 36b) fungiert.

6. Mittelturbinenrahmen (12) nach Anspruch 2, wobei der Mittelturbinenrahmen (12) ein Gewicht von weniger als etwa 91 Kilogramm (200 Pfund) aufweist.

7. Mittelturbinenrahmen (12) nach Anspruch 2, wobei der Torsionskasten (22a; 22b) eine Ringstruktur (22a; 22b) ist.

8. Mittelturbinenrahmen (12) nach Anspruch 1, wobei das erste Element im Wesentlichen parallel zum zweiten Element ist.

9. Mittelturbinenrahmen (12) nach Anspruch 1, wobei der erste Lagerkonus (26) mit der Einzellastschalenstruktur in einem ersten Winkel, der nicht im Wesentlichen senkrecht zur Drehachse des Gasturbinentriebwerks (10) steht, verbunden ist und der zweite Lagerkonus (28) mit der Einzellastschalenstruktur in einem zweiten Winkel, der nicht im Wesentlichen senkrecht zur Drehachse des Gasturbinentriebwerks (10) steht, verbunden ist.

10. Gasturbinentriebwerk (10), umfassend:
ein erstes Lager (18);
ein zweites Lager (20), das axial von dem ersten Lager (18) in Bezug auf eine Drehachse des Gasturbinentriebwerks (10) beabstandet ist;
ein Triebwerksgehäuse (14), das radial von dem ersten und zweiten Lager (18, 20) beabstandet ist;
einen ersten Lagerkonus (26), der mit dem ersten Lager (18) verbunden ist, um eine erste Last von dem ersten Lager (18) zu übertragen;
einen zweiten Lagerkonus (28), der mit dem zweiten Lager (20) verbunden ist, um eine zweite Last von dem zweiten Lager (20) zu übertragen;
und
den Mittelturbinenrahmen (12) nach einem der vorhergehenden Ansprüche.

## Revendications

1. Cadre de turbine intermédiaire (12) relié à au moins un bâti (16) d'un moteur à turbine à gaz (10) pour transférer une première charge à partir d'un premier roulement (18) et une seconde charge à partir d'un second roulement (20) au bâti (16), le cadre de turbine intermédiaire (12) comprenant :
une structure d'enveloppe de charge à point unique, dans laquelle la première charge est transférée aux structures de charge à point unique au moyen d'un premier cône de roulement (26) à un premier angle qui n'est pas perpendiculaire à l'axe de rotation du moteur à turbine à gaz (10) et la seconde charge est transférée aux structures d'enveloppe de charge à point unique au moyen d'un second cône de roulement (28) à un second angle qui n'est pas perpendiculaire à l'axe de rotation du moteur à turbine à gaz (10) ; et
une pluralité de contrefiches (24) reliées à la structure d'enveloppe de charge à point unique pour transférer la charge combinée à partir de la structure d'enveloppe de charge à point unique au bâti (12) ; **caractérisé en ce que** le cadre de turbine intermédiaire (12) comprend en outre :
une surface concave qui s'ouvre dans une direction radialement externe par rapport à un axe de rotation du moteur à turbine à gaz (10) pour combiner la première charge et la seconde charge en une charge combinée ; et
un caisson de torsion (22a ; 22b) ayant un premier élément et un second élément tous deux perpendiculaires à l'axe de rotation du moteur à turbine à gaz (10) et joints par la surface concave pour transférer la charge combinée à partir de la surface convexe ; et **en ce que** la structure d'enveloppe de charge à point unique est en forme de X et comprend en outre une branche en X (36b) reliée à la surface concave et au premier élément du caisson de torsion (22a ; 22b), la branche en X (36b) s'étendant le long d'un même plan que le second cône de roulement (28), ou est en forme de U avec les premier et second éléments joints par la surface concave.

2. Cadre de turbine intermédiaire (12) selon la revendication 1, dans lequel la surface concave comprend :
une tige (34a ; 34b) pour combiner les première et seconde charges en la charge combinée, dans lequel les premier et second cônes de roulement (26, 28) sont intégrés avec la tige (34a ; 34b) ; et
une branche (36a ; 36b) reliée à la tige (34a ; 34b) pour absorber une partie de la charge combinée à partir de la tige (34a ; 34b), et
dans lequel le caisson de torsion (22a ; 22b) a une première extrémité et une seconde extrémité, et dans lequel le caisson de torsion (22a ; 22b) est relié à la tige (34a ; 34b) et à la branche (36a ; 36b) à la première extrémité et relié à la pluralité de contrefiches (24) à la seconde extrémité.

3. Cadre de turbine intermédiaire (12) selon la revendication 2, dans lequel le caisson de torsion (22a ; 22b) transfère la charge combinée à partir de la tige (34a ; 34b) et de la branche (36a ; 36b) à la pluralité de contrefiches (24).

4. Cadre de turbine intermédiaire (12) selon la revendication 2, dans lequel la tige (34a ; 34b) fournit une protection thermique au caisson de torsion (22a ; 22b).

5. Cadre de turbine intermédiaire (12) selon la revendication 2, dans lequel la branche (36a ; 36b) fonctionne comme un élément de transfert de charge de bras de roulement (36a ; 36b).

6. Cadre de turbine intermédiaire (12) selon la revendication 2, dans lequel le cadre de turbine intermédiaire (12) a un poids inférieur à environ 200 livres (91 kg).

7. Cadre de turbine intermédiaire (12) selon la revendication 2, dans lequel le caisson de torsion (22a ; 22b) est une structure annulaire (22a ; 22b).

8. Cadre de turbine intermédiaire (12) selon la revendication 1, dans lequel le premier élément est sensiblement parallèle au second élément.

9. Cadre de turbine intermédiaire (12) selon la revendication 1, dans lequel le premier cône de roulement (26) est relié à la structure d'enveloppe de charge à point unique à un premier angle qui n'est pas sensiblement perpendiculaire à l'axe de rotation du moteur à turbine à gaz (10) et le second cône de roulement (28) est relié à la structure d'enveloppe de charge à point unique à un second angle qui n'est pas sensiblement perpendiculaire à l'axe de rotation du moteur à turbine à gaz (10) .

10. Moteur à turbine à gaz (10) comprenant :
un premier roulement (18) ;
un second roulement (20) espacé axialement du premier roulement (18) par rapport à un axe de rotation du moteur à turbine à gaz (10) ;
un carter de moteur (14) espacé radialement des premier et second roulements (18, 20) ;
un premier cône de roulement (26) relié au premier roulement (18) pour transférer une première charge à partir du premier roulement (18) ;
un second cône de roulement (28) relié au second roulement (20) pour transférer une seconde charge à partir du second roulement (20) ; et
le cadre de turbine intermédiaire (12) selon une quelconque revendication précédente.
